# EUROPEAN PATENT APPLICATION

(11) **EP 2 883 904 A1**
(43) Date of publication of application: **17.06.2015**
(21) Application number: 13306718.1
(22) Date of filing: 13.12.2013
(51) Int. Cl.: C08K 5/5353, C08L 31/04, H01B 3/00

(54) **Flame retardant polymeric material**

(71) Applicant: Nexans, 75008 Paris (FR)
(72) Inventor: Niederwieser, Joachim, 91154 ROTH (DE); Dinkelmeyer, Christof, 91207 LAUF (DE); Gemmel, Alfred, 90562 KALCHREUTH (DE); Bäumler, Kathrin, 91220 Schnaittach (DE)
(74) Representative: Peguet, Wilfried

(57) **Abstract**

The present invention relates to a cable comprising at least one elongated conductor and at least one polymeric material obtained from a polymeric composition comprising at least one polymer and at least one flame retardant filler, characterized in that said flame retardant filler is a phosphonic acid comprising at least one phosphonic acid group and at least one nitrogen group.

## Description

The present invention relates to a flame retardant polymeric material used in a cable.

More particularly, the polymeric material is used in electric and/or optical cables as a layer surrounding one or several conductors, or as a bedding to fill voids inside a cable.

The document US-6 429 246 describes a non-flammable halogen-free mixture for making thermoplastic materials with increased heat resistance for manufacturing electrical and optical cables. Said composition includes a copolymer, a salt of metal, a metal hydroxide mainly between 80 and 120 parts by weight over 100 parts by weight of copolymer, and a silicone material.

However, the amount of metal hydroxide is too high, so that the mechanical properties as well as the flame retardant properties of said mixture are not optimized.

The present invention seeks to solve the above-mentioned problems of the prior art, in providing a new polymeric composition having improved flame retardant properties, while guaranteeing good mechanical properties.

To this end, an object of the present invention is to provide a cable comprising at least one elongated conductor and at least one polymeric material obtained from a polymeric composition comprising at least one polymer and at least one flame retardant filler, characterized in that said flame retardant filler is a phosphonic acid comprising at least one phosphonic acid group and at least one nitrogen group.

The present invention allows advantageously to provide a polymeric composition which can be filled with a high content of flame retardant filler, getting thus high flame retardant properties, while presenting good mechanical properties such as tensile strength and elongation at break.

More particularly, an advantage of the phosphonic acid according to the invention, used as flame retardant filler in the polymer material, is that when it is compared with the flame retardant aluminum trihydroxide (ATH), it can be present in a smaller proportion in the polymer matrix (i.e. polymer in the polymeric composition) in order to achieve comparable flame retardancy, or if the proportion in the polymer matrix is identical, it achieves higher flame retardancy.

The mechanical properties of the polymeric material can further satisfy HM4 (DIN VDE 0276-604) standard, with a tensile strength superior to 9,0 MPa, and with an elongation at break superior to 125%.

### The phosphonic acid

The phosphonic acid of the present invention is a compound comprising:
- at least one phosphonic acid group, and more preferably at least two phosphonic groups, and even more preferably at least three phosphonic groups, and
- at least one nitrogen group, and more preferably at least two nitrogen groups.

More particularly, the at least one phosphonic acid group and the at least one nitrogen group, of the phosphonic acid, are included in the same molecule.

The phosphonic acid group can be selected among -PO(OH)₂, -PO(OH)H, and a combination thereof.

The nitrogen group can be an amine group, so that the phosphonic acid can comprise at least one amine group. In a particular embodiment, the phosphonic acid can comprise at least two amine groups.

More particularly, the amine group can be a secondary amine or a tertiary am ine, and preferably a tertiary am ine.

When the phosphonic acid of the present invention comprises at least one nitrogen group under the form of an amine group, the phosphonic acid is an amino-phosphonic acid.

The phosphonic acid of the present invention can be in a free form or in a salt form. The free form, which is the preferred form of the phosphonic acid of the present invention, means that the phosphonic acid is not in a salt form.

When the phosphonic acid is a salt (i.e. in a salt form), the combined ion can be an alkali metal ion such as sodium ion.

The phosphonic acid can include at least one group selected among-CH₂-PO(OH)₂ and -CH₂-PO(OH)H, this group being covalently bonded to the nitrogen group, and more preferably to the amine group.

Some preferred formulas of phosphonic acids, which are more particularly amino-phosphonic acids, are as follows:
- Amino-trimethylene phosphonic acid: 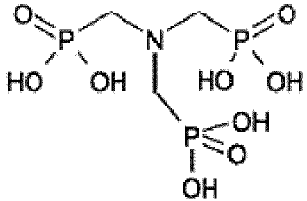
- Diethylene triamine penta(methylene phosphonic acid): 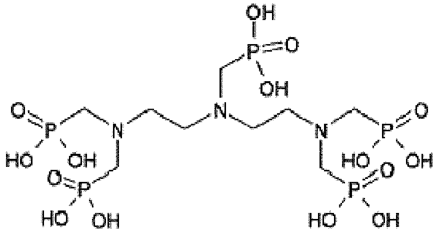
- Ethylene diamine tetra(methylene phosphonic acid):

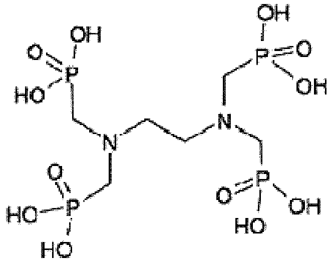

The polymeric composition can comprise at least 20 parts by weight of phosphonic acid(s) over 100 parts by weight of polymer(s) in the polymeric composition, and more preferably at least 40 parts by weight of phosphonic acid(s) over 100 parts by weight of polymer(s) in the polymeric composition.

An amount lower than 20 parts by weight of phosphonic acid(s) does not provide efficient flame retardant properties.

The polymeric composition can comprise up to 200 parts by weight of phosphonic acid(s) over 100 parts by weight of polymer(s) in the polymeric composition, and more preferably up to 180 parts by weight of phosphonic acid(s) over 100 parts by weight of polymer(s) in the polymeric composition

An amount higher than 200 parts by weight of phosphonic acid(s) does not provide acceptable mechanical values and processability.

### The Polymer

The polymer of the present invention can be an organic or an inorganic polym er.

Inorganic polymers can be polymers including atoms of silicium (Si), such as polyorganosiloxane or silicone rubber.

More particularly, the polymer of the present invention can only include organic polymer(s), excluding for example the use of polyorganosiloxane or silicone rubber.

The polymer of the present invention can be easily extruded around an elongated conductor.

One means by the term "polymer" all types of polymers well-known in the art, such as homopolymer, copolymer, copolymer block, terpolymer,...etc

The polymer of the present invention can be a thermoplastic or an elastomer, which can be cross-linked by technic well known in the art.

The polymer of the present invention can advantageously be a polymer of olefin (i.e. olefin polymer), which means that the polymer is obtained from at least one olefin monomer.

The polymeric composition of the present invention can include one or several polymer(s), forming a polymeric matrix in which one or several flame retardant filler(s) are mixed.

The polymer of the present invention aims advantageously at improving flame retardancy, in particular through an increase in the oxygen requirement for combustion, a reduction in the rate of heat release during combustion, and also, the formation of foamed ash made from the polymer in the event of a fire.

In a preferred embodiment, the polymer of the present invention is a polymer of ethylene or a polymer of propylene, and more particularly a copolymer of ethylene or a copolymer of propylene, and even more preferably a copolymer of ethylene vinyl acetate copolymer (EVA) or a copolymer of propylene vinyl acetate.

The polymer according to the present invention can be a mixture of at least two different olefinic polymers, including for example a mixture of an olefinic vinyl acetate copolymer and an olefinic polymer such as ethylene polymer (homopolymer or copolymer), propylene polymer (homopolymer or copolymer), or more particularly ethylene and propylene copolymer.

### Other Fillers and additives

In a preferred embodiment, the polymeric composition can only include phosphonic acid(s) as flame retardant filler.

However, in another embodiment, the polymeric composition can include, in addition to phosphonic acid(s), other types of flame retardant fillers such as hydrated fillers, and more particularly metallic hydroxides (e.g. aluminum trihydroxide (ATH), magnesium dihydroxide (MDH)).

The polymeric composition can also include electrically conductive filler, such as carbon black, in an amount to improve dielectric resistance without impairing the electrically insulating properties of the polymeric material, or in an amount to provide semi-conductive property to the polymeric material.

The polymeric composition of the invention may further comprise at least one of the following additives well-known in the art: stabilizers such as antioxidants, agents for protection against aging such as UV protector, coupling agents, crosslinking agents such as organic peroxide and/or silane based agents, dyes, processing aids, ...etc

### The polymeric material

The polymeric material according to the invention can be a thermoplastic material or a cross-linked material, depending on the required application.

The polymeric material can advantageously be halogen-free.

The polymeric material can advantageously be silicone-free.

The polymeric material can be an extruded material, such as for example an extruded material as a layer around the elongated conductor, or as a bedding to fill voids inside the cable.

The polymeric material according to the invention can be a layer physically in direct contact with the conductor, an intermediate layer, or the outermost layer of the cable.

Depending of the electrical properties wanted around the conductor of the cable, the polymer material can be an electrically conductive material or a semi-conductive material or an electrically insulating material.

### The Cable

In the present description the term "cable" indicates an electric cable and/or an optic cable, including at least one elongated electric and/or optic conductor.

The polymeric material can surround one or several conductor insulated or not, along the cable.

In particular, the elongated conductor can be in a central position in the cable.

The elongated conductor can be a single core conductor such as an electrical wire, or a multicore conductor such as a plurality of wires.

The present invention will become more fully understood from the examples given herein below and from the accompanying drawing, which are given by way of illustration only, and thus, which are not limits of the present invention, and wherein:

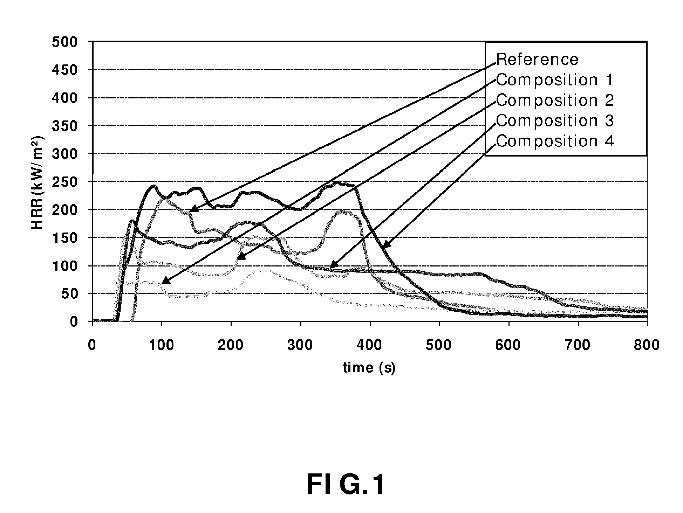

Figure 1 represents a graph of heat release rate (HRR) as function of time according to ISO 5660-1.

Different compositions according to the present invention (i.e. Compositions 1 to 4) and one as comparative example (i.e. Reference) have been prepared, and are electrically insulating materials.

The amounts in table 1 are expressed in parts by weight over 100 parts by weight of polymer in the composition.

In table 1, the polymer matrix is only constituted by a copolymer of ethylene vinyl acetate.

**Table 1**

| | **Reference** | **Composition 1** | **Composition 2** | **Composition 3** | **Composition 4** |
|---|---|---|---|---|---|
| **EVA** | 100 | 100 | 100 | 100 | 100 |
| **ATH** | 160 | 0 | 0 | 0 | 0 |
| **APA** | 0 | 160 | 120 | 80 | 40 |
| **Additives** | 11 | 11 | 11 | 11 | 11 |

The different compounds listed in table 1 are as follows:
- EVA is a copolymer of ethylene and vinyl acetate, commercialized by EXXON Mobil, under the reference Escorene Ultra EVA 00014;
- ATH is aluminum tri hydroxide, commercialized by Martinswerk, under the reference Martinal OL LEO 104;
- APA is an amino-phosphonic acid in the form of the free acid, which is ethylene diamine tetra(methylene phosphonic acid), commercialized by Zschimmer und Schwarz, under the reference Cublen E 950; and
- Additives are a mixture of antioxidant, UV protector and coupling agent, well-known in the art, and are identical for the Reference and the Compositions 1 to 4.

From the Reference and the compositions 1 to 4, plates are produced to measure, with cone calorimetry, the heat release rate (HRR) as function of time, according to ISO 5660-1 standard.

Firstly, the Reference and the compositions 1 to 4 are respectively mixed in a laboratory twin screw extruder, and pellets are formed after extrusion.

Secondly, plates are obtained respectively from the pellets of Reference and the compositions 1 to 4, by pressing them in a hot press at 170°C according to to ISO 5660-1. With help of temperature and pressure, the dimensions of the obtained plates are 100mm x 100mm x 3mm.

Results are gathered in figure 1. In figure 1, the heat release rate (HRR) expressed in kilowatts by square meter (kW/m²), is reduced by 60% from Reference (peak of 210 kW/m² at 110 s) to Composition 1 (peak of 85 kW/m² at 40 s) after ignition, measured according to ISO 5660-1.

The limit oxygen index (LOI) has been determined according to ISO 4589-2 standard, on the obtained plates. The LOI is the minimum concentration of oxygen, expressed as a percentage (%), that will support combustion of a polymer.

Results of LOI are gathered in the following table 2.

**Table 2**

| | **Reference** | **Composition 1** | **Composition 2** | **Composition 3** | **Composition 4** |
|---|---|---|---|---|---|
| **LOI (%)** | 31-32 | 50-50,5 | 38,5-39,0 | 36,0-36,5 | 28,5-29,0 |

The results show that the flame retardant effect has significantly increased from Reference (LOI of 31-32%) to Composition 1 (LOI of 50-50,5%).

In addition, a reduction of filler load by 50% provides the same flame retardant effect (see Reference versus Compositions 3 and 4).

Mechanicals properties such as tensile strength en elongation at break have been measured according to IEC 60811 standard, for the Reference and Compositions 3 and 4.

Results are gathered in the following table 3.

**Table 3**

| | **Reference** | **Composition 3** | **Composition 4** |
|---|---|---|---|
| **Tensile strength (MPa)** | 13,2 | 9,3 | 12,7 |
| **Elongation at break (%)** | 145 | 420 | 525 |

Compositions 3 and 4, according to the invention, present good tensile strength and elongation at break, with tensile strength superior to 9,0 MPa, and elongation at break superior to 125%.

## Claims

1. Cable comprising at least one elongated conductor and at least one polymeric material obtained from a polymeric composition comprising at least one polymer and at least one flame retardant filler, **characterized in that** said flame retardant filler is a phosphonic acid comprising at least one phosphonic acid group and at least one nitrogen group.

2. Cable according to claim 1, **characterized in that** the phosphonic acid group is selected among -PO(OH)₂, -PO(OH)H, and a combination thereof.

3. Cable according to claim 1 or 2, **characterized in that** the phosphonic acid includes at least two phosphonic acid groups.

4. Cable according to any of the preceding claims, **characterized in that** the phosphonic acid is in free form or in salt form.

5. Cable according to any of the preceding claims, **characterized in that** the nitrogen group is an amine group.

6. Cable according to claim 5, **characterized in that** the amine group is a tertiary am ine.

7. Cable according to any of the preceding claims, **characterized in that** the phosphonic acid includes at least one group selected among -CH₂-PO(OH)₂ and -CH₂-PO(OH)H, this group being covalently bonded to the nitrogen group.

8. Cable according to any of the preceding claims, **characterized in that** the polymeric composition comprises at least 20 parts by weight of phosphonic acid(s) over 100 parts by weight of polymer(s) in the polymeric composition.

9. Cable according to any of the preceding claims, **characterized in that** the polymeric composition comprises up to 200 parts by weight of phosphonic acid(s) over 100 parts by weight of polymer(s) in the polymeric composition.

10. Cable according to any of the preceding claims, **characterized in that** the polymer is an olefin polymer.

11. Cable according to any of the preceding claims, **characterized in that** the polymer is an ethylene vinyl acetate copolymer (EVA).

12. Cable according to any of the preceding claims, **characterized in that** the polymeric material is halogen-free.

13. Cable according to any of the preceding claims, **characterized in that** the polymeric material is an extruded material.

14. Cable according to any of the preceding claims, **characterized in that** the polymeric material is the outermost layer of the cable.
